# EUROPEAN PATENT SPECIFICATION

(11) **EP 3 228 455 B1**
(45) Date of publication and mention of the grant of the patent: **02.09.2020**
(21) Application number: 17000497.2
(22) Date of filing: 24.03.2017
(51) Int. Cl.: B32B 17/10

(54) **LAMINATED GLASS**
VERBUNDGLAS
VERRE FEUILLETÉ

(30) Priority: 28.03.2016 JP 2016064500
(43) Date of publication of application: 11.10.2017
(73) Proprietor: AGC Inc., Tokyo 100-8405 (JP)
(72) Inventor: Yajima, Toshimi, Tokyo, 100-8405 (JP); Hori, Hiroshi, Tokyo, 100-8405 (JP); Yoda, Kazushige, Tokyo, 100-8405 (JP); Nakano, Atsushi, Tokyo, 100-8405 (JP)
(74) Representative: Müller-Boré & Partner Patentanwälte PartG mbB

(56) References cited:
- EP-A2- 1 215 039
- WO-A1-2015/092385
- WO-A1-2015/137518
- US-A1- 2004 098 946
- US-A1- 2011 027 515
- US-A1- 2013 062 120

## Description

### CROSS-REFERENCE TO RELATED APPLICATIONS

This application claims priority from Japanese Patent Application No. 2016- 064500 filed on March 28, 2016, the entire subject matter of which is incorporated herein by reference.

### BACKGROUND OF THE INVENTION

### Technical Field

The present invention relates to a laminated glass which is used as a vehicle windshield etc.

### Background Art

It is known that an information device such as a camera is installed inside a vehicle and information signals relating to traffic situations etc. are sent and received through a laminated glass such as a vehicle windshield (refer to Patent document 1, for example).

Patent document 1 discloses a laminated glass for use as a windshield wherein an upper peripheral part thereof includes a shade part equipped with an observation window for a surveillance camera, the laminated glass being obtained by fitting a transparent synthetic resin having substantially the same shape as the observation window into a hole, heating a butt-joint boundary therebetween with hot air to soften the synthetic resin interposed between a plurality of glass plates and cause the transparent synthetic resin to stick to the transparent synthetic resin, and cooling the boundary to unite the synthetic resins with each other while preventing the boundary from having defects such as air bubbles or transmission distortions.

Patent document 2 describes a laminated glazing comprising a first ply of glazing material and a second ply of glazing material joined by at least one ply of adhesive interlayer material. The first ply of glazing material is composed of soda-lime-silicate glass and may have a thickness between 1.5 mm and 2.5 mm, an edge region having a residual edge stress with a net tension less than 15MPa and an edge compression of greater than 24MPa.

Patent document 3 describes a laminated glazing panel comprising at least one sheet of glass having a thickness of between 0.8 mm and 3.5 mm and which has an edge compression stress of between 20 MPa and 80 MPa and a surface compressive stress at a central portion of the glass of between 2 MPa and 39 MPa.

Patent document 4 describes a glass plate having a thickness of from 1.5 mm to 3 mm and which has a peripheral region having a predetermined width along the edge line of the plate and having its principal stress difference of compressive properties, an intermediate region having a predetermined width adjacent to an inner periphery of the peripheral region and having its principal stress difference of tensile properties and a central region occupying an inner peripheral side of the intermediate region.

### Prior Art Documents

### Patent documents

Patent document 1: JP-A-2006-96331
Patent document 2: WO 2015/092385 A1
Patent document 3: US 2004/098946 A1
Patent document 4: EP 1 215 039 A2

### BRIEF SUMMARY OF THE INVENTION

Patent document 1 discloses the laminated glass which is formed with the observation window for an information device such as a surveillance camera that allows passage of signals being transmitted to/from an information device (e.g., millimeter wave signals) relating to traffic situations etc. However, if cracks, a scratch, or the like arises in the observation window of the laminated glass by a kicked-up stone or the like, it may cause trouble such as a signal recognition error. However, no countermeasure against this problem is disclosed in Patent document 1.

The present invention provides a laminated glass capable of preventing cracks or the like from developing in a particular region such as a transmission region which allows passage of signals being transmitted to/from an information device installed in a vehicle.

In light of the above, the present invention provides a laminated glass which includes a glass plate including a first plane compressive region having a prescribed width inside an outer peripheral edge of the glass plate in a plan view, a first plane tensile region adjacent to an inner peripheral side of the first plane compressive region and having a prescribed width, a neutral region occupying an inner peripheral side of the first plane tensile region, and a second plane compressive region located on an inner peripheral side of the first plane compressive region in a plan view.

The present invention provides a laminated glass capable of preventing cracks or the like from developing in a particular region such as a transmission region which allows passage of signals being transmitted to/from an information device installed in a vehicle.

### BRIEF DESCRIPTION OF THE DRAWINGS

FIG. 1 is a conceptual diagram which shows an application of a laminated glass according to an embodiment of the present invention.
FIG. 2A and FIG. 2B show an example of the laminated glass shown in FIG. 1. FIG. 2A is an enlarged sectional view of part X of the laminated glass shown in FIG. 1, and FIG. 2B is an enlarged sectional view of part Y of FIG. 2A.
FIG. 3 is a schematic view of a convex part of a visible light shielding region which shows a transmission region, compressive regions, and tensile regions of the laminated glass according to the embodiment of the present invention.
FIG. 4A to FIG.4F show first to sixth modifications, respectively, of the laminated glass according to the embodiment of the present invention. FIG. 4A shows a first modification. FIG.4B shows a second modification. FIG.4C shows a third modification. FIG.4D shows a fourth modification. FIG.4E shows a fifth modification. FIG.4F shows a sixth modification.
FIG. 5A and FIG. 5B are examples of sectional stress diagrams showing compressive stress and tensile stress profiles in a glass thickness direction in an E-E cross section and an F-F cross section, respectively, of a first glass plate of the laminated glass according to the embodiment of the present invention.
FIG. 6 shows test regions A, B, and I of a windshield.

### DETAILED DESCRIPTION OF THE INVENTION

A laminated glass 1 according to a specific embodiment of the present invention will be hereinafter described in detail with reference to the accompanying drawings. Although in the following description the term "particular region" means a transmission region that allows passage of signals being transmitted to/from an information device installed inside a vehicle, the present invention is not limited to this case.

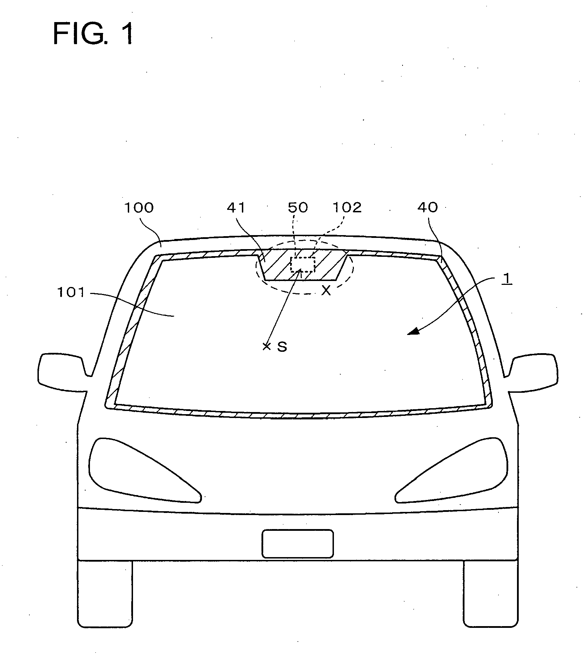

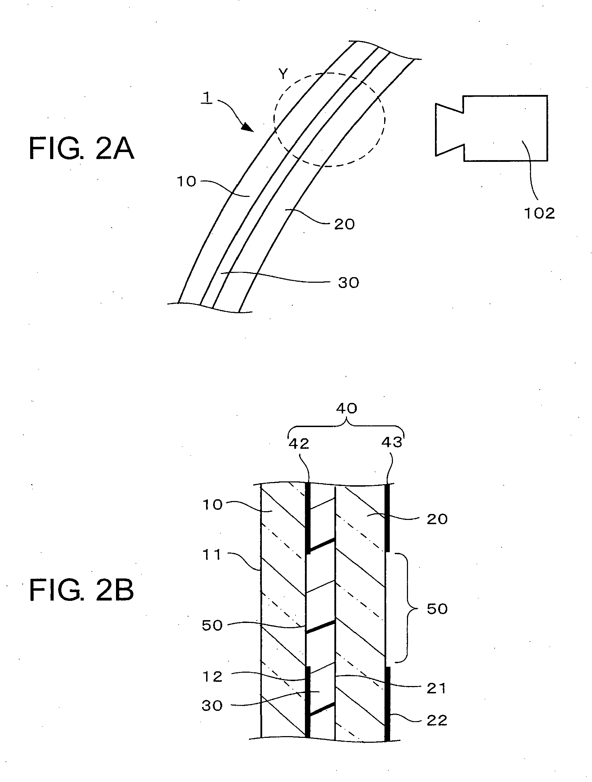

FIG. 1 is a conceptual diagram which shows an application of the laminated glass 1 according to the embodiment. FIG. 2A is an enlarged sectional view of part X of the laminated glass shown in FIG. 1, and FIG. 2B is an enlarged sectional view of part Y of FIG. 2A.. The laminated glass 1 according to the embodiment will be described below in detail with reference to FIG. 1, FIG. 2A and FIG. 2B.

The laminated glass 1 according to this embodiment is to be mounted mainly as a windshield 101 of a vehicle 100, e.g., a motor vehicle. In recent years, vehicles 100 are each equipped with an information device 102 mounted therein in order to ensure driving safety. The information device 102 is a device for preventing a rear-endcollision and a collision against something existing ahead of the vehicle, e.g., a vehicle ahead, pedestrian, obstacle, etc., or for letting a driver know a danger, by means of a camera, radar, etc. The information device 102 includes an information-receiving device and/or an information-transmitting device, and signals are transmitted and received through the laminated glass 1 using a millimeter-wave radar, a stereo-camera, an infrared laser, or the like. The term "signals" means electromagnetic wave including millimeter wave, visible light, infrared light, and the like.

The laminated glass 1 includes a first glass plate 10, a second glass plate 20, and an intermediate layer 30 interposed between the first glass plate 10 and the second glass plate 20. The first glass plate 10 includes a first main surface 11 arranged on a side opposite to the intermediate layer 30 and a second main surface 12 in contact with the intermediate layer 30, while the second glass plate 20 includes a third main surface 21 in contact with the intermediate layer 30 and a fourth main surface 22 arranged on a side opposite to the intermediate layer 30.

Examples of compositions of the first glass plate 10 and the second glass plate 20 used in this embodiment include a glass having a composition which includes, as represented by mole percentage based on oxides, from 50 to 80% of SiO₂, from 0 to 10% of B₂O₃, from 0.1 to 25% of Al₂O₃, from 3 to 30% of Li₂O+Na₂O+K₂O, from 0 to 25% of MgO, from 0 to 25% of CaO, from 0 to 5% of SrO, from 0 to 5% of BaO, from 0 to 5% of ZrO₂; and from 0 to 5% of SnO₂. However, the compositions thereof are not particularly limited.

The composition of the intermediate layer 30 may be one which is commonly employed in conventional vehicle laminated glasses; for example, the intermediate layer 30 may be made of polyvinyl butyral (PVB), ethylene vinyl acetate (EVA), or the like. Alternatively, the intermediate layer 30 may be made of a thermosetting resin which is in liquid form before being subjected to heating. That is, it suffices that the intermediate layer 30 assumes a layer form when it is a component of the laminated glass 1 completed. The intermediate layer 30 may be in liquid form before joining of the first glass plate 10 and the second glass plate 20.

The laminated glass 1 is formed with a visible light shielding region (hereinafter also referred to as black shielding films 40) in its peripheral region. The visible light shielding region is formed with, in the vicinity of the information device 102, a convex part 41 which protrude in a plane of the laminated glass 1. The black shielding films 40 include a first black shielding film 42 which is formed at the boundary between the second main surface 12 of the first glass plate 10 and the intermediate layer 30, and a second black shielding film 43 which is formed on the fourth main surface 22 of the second glass plate 20. Each of the first black shielding film 42 and the second black shielding film 43 has an opening, whereby a transmission region 50 (shown as a rectangle by a broken line in FIG. 1) allows passage of signals being transmitted to/from the information device 102.

The transmission region 50 is not limited to one that is enclosed by the visible light shielding region. In the present invention, the transmission region means a region which is necessary for signals being transmitted to/from the information device 102 installed; that is, the transmission region may be a region which is not enclosed by the visible light shielding region. The transmission region may even exist within the visible light shielding region for certain types of radio waves to be sent or received.

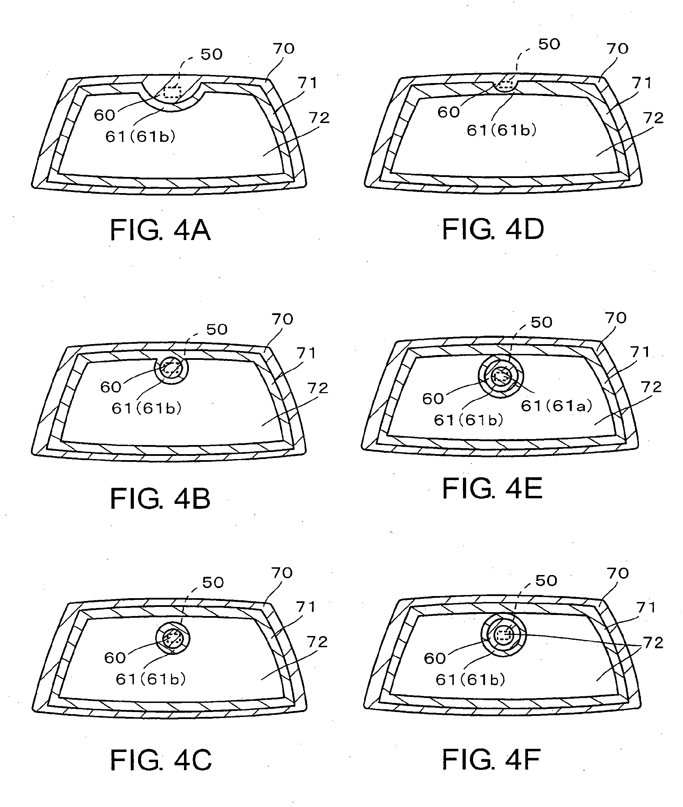

The first glass plate 10 includes a first plane compressive region (see the first plane compressive region 70 in FIG. 4A to FIG.4F described later) having a prescribed width inside an outer peripheral edge of the glass plate in a plan view, a first plane tensile region (see the first plane tensile region 71 in FIG. 4A to FIG.4F described later ) adjacent to an inner peripheral side of the first plane compressive region and having a prescribed width, and a neutral region (see the first neutral region 72 in FIG. 4A to FIG.4F described later) occupying an inner peripheral side of the first plane tensile region in a plane view.

The first plane compressive region is a peripheral region of having an edge compression (E/C) formed and has a width of, for example, about 5 to 15 mm. The first plane tensile region is a region of having inner tension (I/T) formed and has a width of, for example, about 20 to 50 mm. The neutral region is a region where a plane stress is substantially equal to zero. The plane stress being substantially equal to zero means that an absolute value of the plane stress is small; for example, the plane stress gradually approaches zero (e.g., ±1 MPa, preferably ±500 kPa) as the position goes inward in the plane from an I/T peak position.

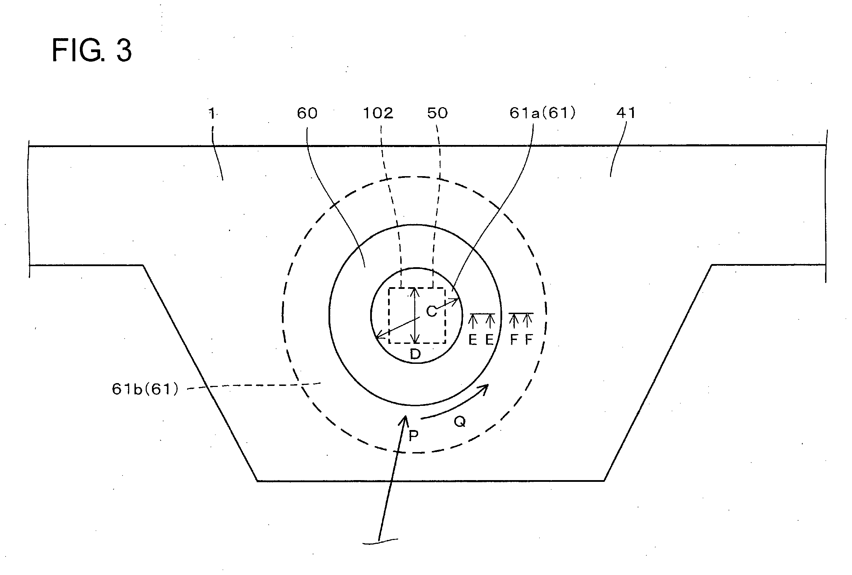

Further, the first glass plate 10 includes a second plane compressive region (see the second plane compressive region 60 in FIG. 3 and FIG. 4A to FIG.4F described later) located on an inner peripheral side of the first plane compressive region in a plan view.

The first plane compressive region and second plane compressive regions are regions where the plane stress is compressive. In this specification, the term "plane stress" means stress obtained by integrating an in-plane stress in a thickness direction. Likewise, the first plane tensile region is a region where the plane stress is tensile. In this specification, the term "region of plane tensile stress" is a superordinate concept including the first plane tensile region. The plane stress can be measured by using a photoelastic measuring apparatus equipped with a polarizing plate.

By forming such a second plane compressive region in the first glass plate 10, development of cracks or the like in a particular region can be prevented.

In this specification, the expression "cracks or the like develop in the particular region" is described as one of the following two patterns. The first pattern is that cracks or the like develop in the particular region due to external force of a kicked-up stone or the like directly acting on a glass surface there. Since the glass surface in the second plane compressive region has a compressive stress, cracks or the like are not prone to develop across the surface of the second plane compressive region. Therefore, in the case where the particular region is within the second plane compressive region, development of cracks or the like of the first pattern can be suppressed.

The second pattern is that cracks or the like develop outside the particular region due to external force of a kicked-up stone or the like acting on the glass surface there and the crack or the like then reach the particular region.

In general, the laminated glass 1 as the vehicle windshield is not strengthened by air cooling or chemically because it needs to exhibit cushion performance to protect a pedestrian in the event of a collision. Therefore, when cracks S has been caused in the laminated glass 1 by, for example, a kicked-up stone, the cracks S may develop further (development direction is indicated by an arrow in FIG. 1) to reach the transmission region 50. For example, if horizontal cracks develop in the transmission region 50, it may be recognized erroneously as a horizontal line by the information device 102 to cause trouble in an autonomous drive or the like. Forming the second plane compressive region in the first glass plate 10 makes it possible to also prevent cracks or the like from reaching the particular region (second pattern). This will be described below in detail with reference to FIG. 3.

In FIG. 3, the particular region is a transmission region 50 which allows passage of signals being transmitted to/from the information device 102. As shown in FIG. 3, in the laminated glass 1 according to the embodiment, a second plane compressive region 60 is formed around the transmission region 50, to prevent cracks or the like from developing further to reach the transmission region 50.

For example, the second plane compressive region 60 can be formed by making a cooling rate higher than for its neighborhood by bringing a cooling member such as a metal member to a glass surface in the particular region (contact cooling), bringing a cooling member close to a glass surface in the particular region (radiation cooling), or blowing a cool wind over a glass surface in the particular region (light wind cooling), or by some other method in cooling a laminated glass 1 as subjected to bending.

An outside second plane tensile region 61b is located on an outer peripheral side of the second plane compressive region 60. Forming the outside second plane tensile region 61b enables formation of the second plane compressive region 60. In particular, forming the outside second plane tensile region 61b makes it easier to set the compressive stress stronger than or equal to zero at the center in the thickness direction of the glass plate in an outer peripheral side of the second plane compressive region 60.

In the embodiment, the transmission region 50 for signals being transmitted to/from the information device 102 is located within the second plane compressive region 60 or a region surrounded by the second plane compressive region 60 in a plan view of the laminated glass 1. However, in the present invention, it suffices that the second plane compressive region 60 be formed in at least one of the first glass plate 10 and the second glass plate 20. It is preferable that the second plane compressive region 60 be formed in one, located on the outside of the vehicle 100, of the first glass plate 10 and the second glass plate 20.

In the case where cracks, scratches, or the like occur in the laminated glass 1 by a kicked-up stone or the like outside the transmission region 50, by forming the second compressive region, the cracks and the like develop further along arrow P and go around the outer shape of the second plane compressive region 60 along arrow Q, thereby preventing the cracks or the like from reaching to the transmission region. In order to make cracks, a scratch, or the like go around the second plane compressive region 60 smoothly, it is preferable that an outer shape of the second plane compressive region 60 includes an arc-shaped portion.

In the embodiment, the second plane compressive region 60 assumes a doughnut shape. An inside second plane tensile region 61a is further located on an inner peripheral side of the second plane compressive region 60. This makes it possible to distribute stress that occurs in association with a plane stress occurring in the second plane compressive region 60, that is, to prevent that stress from concentrating in the outside second plane tensile region 61b.

It is preferable that the transmission region 50 be formed inside the inside second plane tensile region 61a. This makes perspective distortion to less prone to occur in the transmission region 50. If perspective distortion exists in the transmission region 50, a problem, for example, may arise that the information device 102 has difficulty performing information recognition.

That is, in the embodiment, the inside second plane tensile region 61a and the outside second plane tensile region 61b are formed as a pair of second plane tensile regions 61. The second plane tensile regions 61 are included in the term "region of plane tensile stress" and may be located inside the first plane tensile region 61. The second plane tensile regions 61 may overlap with the first plane tensile region 71.

An alternative structure is possible in which the second plane compressive region 60 assumes a doughnut shape and a neutral region, instead of the inside second plane tensile region 61a, may be formed inside an inner peripheral side of the plane compressive region 60. This makes perspective distortion to less prone to occur in the transmission region 50 which located inside the second plane compressive region 60.

A shape of the second plane compressive region 60 in a plane view may be selected from various shapes such as a solid circle having no inside second plane tensile region 61a located on inner side around the center, a doughnut shape, and an elliptical shape having the inside second plane tensile region 61a located on inner side around the center.

FIG. 4A to FIG. 4F show examples of various modifications of the windshield 101. Whereas FIG. 4A to FIG. 4F omit the black shielding films 40, they show a first plane compressive region 70, a first plane tensile region 71, and a neutral region 72 which are not shown in FIG. 3. The first plane compressive region 70 is a peripheral region which is located inside the outer shape of the windshield 101 in a plan view and has a prescribed width. A compressive stress is formed in the first plane compressive region 70 by edge compression (E/C). The first plane tensile region 71 is an intermediate region which is formed between the first plane compressive region 70 and the neutral region 72 in a plan view of the windshield 101, and a tensile stress is formed in the first plane tensile region 71 by inner tension (I/T). The neutral region 72 is an inside region located inside the first plane compressive region 70 and the first plane tensile region 71 in a plan view of the windshield 101, and neither compressive stress nor tensile stress is substantially formed in the neutral region 72.

In the first modification shown in FIG. 4A, the second plane compressive region 60 and the outside second plane tensile region 61b are integral with the first plane compressive region 70 and the first plane tensile region 71, respectively, and their outer shapes include an arc shape. In the second modification shown in FIG. 4B, the second plane compressive region 60 is separated from the first plane compressive region 70 and assumes a solid circular shape in a plan view. The outside second plane tensile region 61b is integral with the first plane tensile region 71, and its outer shape includes an arc shape. In the third modification shown in FIG. 4C, the second plane compressive region 60 and the outside second plane tensile region 61b are separated from the first plane compressive region 70 and the first plane tensile region 71, respectively. The second plane compressive region 60 has a solid circle shape in a plan view and is away from the first plane compressive region 70.

In the fourth modification shown in FIG. 4D, the second plane compressive region 60 is integral with the first plane compressive region 70 and its outer shape include an arc shape. The outside second plane tensile region 61b is part of the first plane tensile region 71, that is, is not discernible from the first plane tensile region 71 in appearance. In the fifth modification shown in FIG. 4E, the second plane compressive region 60 and the outside second plane tensile region 61b are separated from the first plane compressive region 70 and the first plane tensile region 71, respectively, and the inside second plane tensile region 61a is formed inside the second plane compressive region 60. Thus, the fifth modification is basically the same as the embodiment shown in FIG. 3. In the sixth modification shown in FIG. 4F, the second plane compressive region 60 and the outside second plane tensile region 61b are separated from the first plane compressive region 70 and the first plane tensile region 71, respectively, and a neutral region 72 is formed inside the second plane compressive region 60.

As for a size relationship between the second plane compressive region 60 and the transmission region 50, it is desirable that the minimum diameter C of the second plane compressive region 60 be larger than or equal to the maximum diameter D of the transmission region 50 (i.e., C ≥ D). This is more effective in preventing cracks or the like from developing in the transmission region 50.

The second plane compressive region 60 and the transmission region 50 may satisfy a relationship 2D > C. That is, it is preferable that the second plane compressive region 60 be not too large. In this case, although there may occur visual distortion involving the second plane compressive region 60 and the transmission region 50, the visual distortion is not discernible if it is small and can be hidden behind the black shielding films 40. Each of the parameters C and D represents the diameter in the case of a circle and the longitudinal length in the case of a rectangle.

In the case where the second plane compressive region 60 is solid, it is preferable that the transmission region 50 be located on a central region of the second plane compressive region 60. Since the plane stress inversion (i.e., inversion between the compressive stress and the tensile stress) occurs at the boundary between the second plane compressive region 60 and the second plane tensile region 61 (i.e., outer peripheral side of the second plane compressive region 60), the plane stress varies steeply around the boundary and perspective distortion is prone to occur there. The transmission region 50 is located at the central part of the second plane compressive region 60, thereby preventing occurrence of perspective distortion in the transmission region 50.

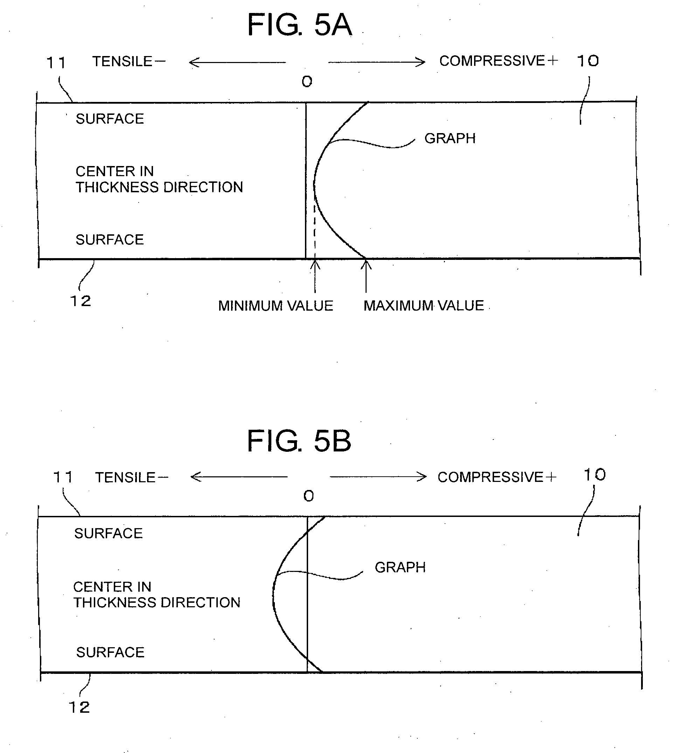

FIG. 5A and FIG. 5B are examples of sectional stress diagrams showing compressive stress and tensile stress profiles in a glass thickness direction in the first glass plate 10 of the laminated glass 1. Each curve shows the residual stress in the thickness direction.

It is preferable that the second plane compressive region 60 have a portion where a compressive stress value at a center in a glass thickness direction of the glass plate is zero or more, that is, a compressive stress remains as the position goes from the first main surface 11 of the first glass plate 10 to its second main surface 12, and a minimum compressive stress value around the center of the first glass plate 10 in the thickness direction is zero or more (see FIG. 5A showing the stress profile in the cross section taken along line E-E in FIG. 3). This makes it easier to stop further development of cracks or the like into the second plane compressive region 60 and to divert it outside the second plane compressive region 60.

To form a compressive stress, a region around the transmission region 50 needs to be cooled faster in a manufacturing process; this can be done by adjusting the temperature difference or the temperature environment around the region concerned. The present invention is not limited to the case that a minimum compressive stress value is zero or more; a slight tensile stress is allowable as long as it does not impair an advantage of the embodiment. It is preferable that the compressive stress at the center in the glass thickness direction be 10 MPa or less.

It is preferable that the average value of plane compressive stress in the second plane compressive region 60 be 15 MPa or less. This makes it easier to stop further development of cracks or the like into the second plane compressive region 60 and to divert it to outside the second plane compressive region 60. This measure is employed because if the glass surface is cooled so much as to produce too large a temperature difference between the glass surface and an inside portion in the thickness direction, the slope of the stress curve tends to become so steep as to produce a large tensile stress, possibly allowing cracks or the like to enter the second plane compressive region 60. It is preferable that the average value of plane compressive stress in the second plane compressive region 60 be 3 MPa or more, more preferably 5 MPa or more, still more preferably 8 MPa or more.

As shown in FIG. 5B, in the outside second plane tensile region 61b, a tensile stress remains around the center of the first glass plate 10 in the thickness direction and a tensile stress value is larger than a compressive stress value in an integration value. In the second tensile regions 61 (inside second plane tensile region 61a and outside second plane tensile region 61b), s tensile stress is formed around the center of the first glass plate 10 in the thickness direction, whereas a compressive stress is formed in the first main surface 11 and second main surface 12.

Although the description which has been made above with reference to FIG. 5A and FIG. 5B is directed to the first glass plate 10, the same is applicable to the second glass plate 20. The glass plate located on the outside of the vehicle 100 when the laminated glass 1 is mounted as the windshield 101 of the vehicle 100 is suitable as an item to which the embodiment is directed.

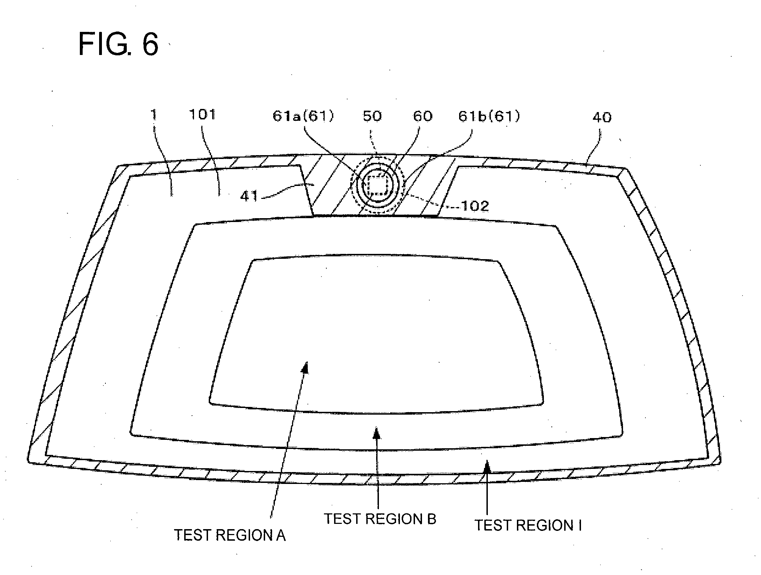

FIG. 6 shows a relationship between test regions A, B, and I of the windshield 101 and the test regions as provided for in JIS R 3212: 2008.

It is preferable that in a plan view a main part of an area of a test region A as provided for in JIS R 3212: 2008 be the neutral region in a plane view. Since the plane stress is substantially equal to zero in the main part of the area of the test region A, which is most important for visual recognition of a driver in the windshield 101, occurrence of perspective distortion in the test region A can be prevented.

It is preferable that the second plane compressive region 60 of the embodiment be formed adjacent to the top edge of the test region A and not be formed under a center line, in the height direction, of the test region A. This makes it possible to form the second plane compressive region 60 while preventing occurrence of visual distortion in an area for visual recognition of the driver.

It is preferable that the second plane compressive region 60 of the embodiment be formed outside the test region A. This makes it possible to prevent occurrence of perspective distortion in the test region A.

Although in the embodiment the black shielding films 40 are formed to improve the decorativeness and hide the information device 102 which is installed in the vicinity of the windshield 101, the black shielding films 40 may be omitted.

It is desirable that the laminated glass 1 include a visible light shielding region in a plan view and that the region of plane tensile stress (in the embodiment, outside second plane tensile region 61b) and an outer peripheral side within the second plane compressive region 60 be located in the visible light shielding region in a plan view. In particular, since the plane stress inversion (i.e., inversion between compressive stress and tensile stress) occurs in a region around the boundary between the second plane compressive region 60 and the outside second plane tensile region 61b (i.e., outer peripheral side of the second plane compressive region 60), the plane stress varies steeply around the boundary and perspective distortion is prone to occur there. This measure makes it possible to render such perspective distortion less visible.

The embodiment is directed to the windshield 101 of the vehicle 100 (an example use of the present invention), the present invention may be applied to a rear glass plate, in which case the laminated glass 1 allows passage of signals being transmitted to/from an information device 102 for enabling a check of the state of an area behind the vehicle 100 and its safe retreat, such as a camera or a radar.

The present invention is not limited the above embodiment, and various modifications, improvements, etc. can be made as appropriate.

### Industrial applicability

The laminated glass according to the present invention can be applied suitably to vehicle laminated glasses capable of preventing cracks or the like from developing in a transmission region that allows passage of signals being transmitted to/from an information device.

### Description of Reference Numerals and Signs

- 1:: Laminated glass
- 10:: First glass plate
- 11:: First main surface
- 12:: Second main surface
- 20:: Second glass plate
- 21:: Third main surface
- 22:: Fourth main surface
- 30:: Intermediate layer
- 40:: Black shielding films (visible light shielding region)
- 41:: Convex part
- 50:: Transmission region
- 60:: Second plane compressive region
- 61:: Second plane tensile regions
- 61a:: Inside second plane tensile region
- 61b:: Outside second plane tensile region
- 70:: First plane compressive region
- 71:: First plane tensile region
- 72:: Neutral region

## Claims

1. A laminated glass (1) comprising a glass plate comprising:
a first plane compressive region (70) having a prescribed width inside an outer peripheral edge of the glass plate in a plan view;
a first plane tensile region (71) adjacent to an inner peripheral side of the first plane compressive region (70) and having a prescribed width;
a neutral region (72) occupying an inner peripheral side of the first plane tensile region (71); and
a second plane compressive region (60) located on inner peripheral side of the first plane compressive region (70) in a plan view;
**characterized in that**:
the glass plate further comprises a transmission region (50) for signals being transmitted to/from an information device, the transmission region (50) located within the second plane compressive region (60) or a region surrounded by the second plane compressive region (60).

2. A laminated glass (1) comprising a glass plate comprising:
first plane compressive region (70) having a prescribed width inside an outer peripheral edge of the glass plate in a plan view; and
a second plane compressive region (60) located on an inner peripheral side of the first plane compressive region (70) in a plan view;
**characterized in that**:
the second plane compressive region (60) is integral with the first plane compressive region (70), and
a transmission region (50) for signals being transmitted to/from an information device is located within the second plane compressive region (60) or a region surrounded by the second plane compressive region (60).

3. The laminated glass according to claim 1 or 2, wherein the first plane compressive region (70) has a width of 5 to 15 mm.

4. The laminated glass (1) according to any one of claims 1 to 3, wherein:
the glass plate further comprises a region of plane tensile stress located on an outer peripheral side of the second plane compressive region (60).

5. The laminated glass (1) according to any one of claims 1 to 4, wherein:
a main part of an area of a test region A as provided for in JIS R 3212: 2008 is the neutral region (71) in a plane view.

6. The laminated glass (1) according to any one of claims 1 to 5, wherein:
an average value of plane compressive stress in the second plane compressive region (60) is 15 MPa or less.

7. The laminated glass (1) according to any one of claims 1 to 6, wherein:
the second plane compressive region (60) has a portion where a compressive stress value at a center in a thickness direction of the glass plate is zero or more.

8. The laminated glass (1) according to any one of claims 1 to 7, wherein:
an outer shape of the second plane compressive region (60) includes an arc-shaped portion.

9. The laminated glass (1) according to any one of claims 1 to 8, wherein:
the second plane compressive region (60) is located away from the first plane compressive region (70).

10. The laminated glass (1) according to any one of claims 1 to 9, wherein:
the second plane compressive region (60) has a circular shape in a plan view.

11. The laminated glass (1) according to any one of claims 1 to 10, wherein:
the second plane compressive region (60) has a doughnut shape in a plan view.

12. The laminated glass (1) according to anyone of claims 1 to 11, wherein:
the glass plate further comprises a visible light shield region in a plan view, and
a region of plane tensile stress and an outer peripheral side within the second plane compressive region (60) are located in the visible light shield region in a plan view.

13. The laminated glass (1) according to anyone of claims 1 to 12, wherein:
a minimum diameter C of the second plane compressive region (60) and a maximum diameter D of the transmission region (50) satisfy a relationship C D.

14. The laminated glass (1) according to claim 13, wherein:
the minimum diameter C of the second plane compressive region (60) and the maximum diameter D of the transmission region (50) satisfy a relationship 2D > C.

15. The laminated glass (1) according to anyone of claims 1 to 14, wherein:
the transmission region (50) is located on a central region of the second plane compressive region (60).

## Patentansprüche

1. Verbundglas (1), umfassend eine Glasplatte, die Folgendes umfasst:
einen ersten ebenen Druckbereich (70), der in einer Draufsicht im Innern einer Außenumfangskante der Glasplatte eine vorgeschriebene Breite aufweist;
einen ersten ebenen Zugbereich (71), der zu einer Innenumfangsseite des ersten ebenen Druckbereichs (70) benachbart ist und eine vorgeschriebene Breite aufweist;
einen neutralen Bereich (72), der eine Innenumfangsseite des ersten ebenen Zugbereichs (71) einnimmt; und
einen zweiten ebenen Druckbereich (60), der in einer Draufsicht auf einer Innenumfangsseite des ersten ebenen Druckbereichs (70) angeordnet ist;
**dadurch gekennzeichnet, dass**:
die Glasplatte ferner einen Übertragungsbereich (50) für Signale umfasst, die zu/von einer Informationsvorrichtung übertragen werden, wobei der Übertragungsbereich (50) innerhalb des zweiten ebenen Druckbereichs (60) oder eines Bereichs angeordnet ist, der von dem zweiten ebenen Druckbereich (60) umgeben ist.

2. Verbundglas (1), umfassend eine Glasplatte, die Folgendes umfasst:
einen ersten ebenen Druckbereich (70), der in einer Draufsicht im Innern einer Außenumfangskante der Glasplatte eine vorgeschriebene Breite aufweist; und
einen zweiten ebenen Druckbereich (60), der in einer Draufsicht auf einer Innenumfangsseite des ersten ebenen Druckbereichs (70) angeordnet ist;
**dadurch gekennzeichnet, dass**:
der zweite ebene Druckbereich (60) einstückig mit dem ersten ebenen Druckbereich (70) ist, und
ein Übertragungsbereich (50) für Signale, die zu/von einer Informationsvorrichtung übertragen werden, innerhalb des zweiten ebenen Druckbereichs (60) oder eines Bereichs angeordnet ist, der von dem zweiten ebenen Druckbereich (60) umgeben ist.

3. Verbundglas nach Anspruch 1 oder 2, wobei der erste ebene Druckbereich (70) eine Breite von 5 bis 15 mm aufweist.

4. Verbundglas (1) nach einem der Ansprüche 1 bis 3, wobei:
die Glasplatte ferner einen Bereich ebener Zugspannung umfasst, der auf einer Außenumfangsseite des zweiten ebenen Druckbereichs (60) angeordnet ist.

5. Verbundglas (1) nach einem der Ansprüche 1 bis 4, wobei:
ein Hauptteil eines Bereichs eines wie in JIS R 3212: 2008 vorgesehenen Testbereichs A in einer Draufsicht der neutrale Bereich (71) ist.

6. Verbundglas (1) nach einem der Ansprüche 1 bis 5, wobei:
ein Mittelwert ebener Druckspannung in dem zweiten ebenen Druckbereich (60) 15 MPa oder weniger ist.

7. Verbundglas (1) nach einem der Ansprüche 1 bis 6, wobei:
der zweite ebene Druckbereich (60) einen Abschnitt aufweist, an dem ein Druckspannungswert in einer Mitte in einer Dickenrichtung der Glasplatte Null oder mehr ist.

8. Verbundglas (1) nach einem der Ansprüche 1 bis 7, wobei:
eine äußere Form des zweiten ebenen Druckbereichs (60) einen bogenförmigen Abschnitt umfasst.

9. Verbundglas (1) nach einem der Ansprüche 1 bis 8, wobei:
der zweite ebene Druckbereich (60) entfernt von dem ersten ebenen Druckbereich (70) angeordnet ist.

10. Verbundglas (1) nach einem der Ansprüche 1 bis 9, wobei:
der zweite ebene Druckbereich (60) in einer Draufsicht eine Kreisform aufweist.

11. Verbundglas (1) nach einem der Ansprüche 1 bis 10, wobei:
der zweite ebene Druckbereich (60) in einer Draufsicht eine Donut-Form aufweist.

12. Verbundglas (1) nach einem der Ansprüche 1 bis 11, wobei:
die Glasplatte ferner in einer Draufsicht einen Bereich zur Abschirmung von sichtbarem Licht umfasst, und
ein Bereich ebener Zugspannung und eine Außenumfangsseite innerhalb des zweiten ebenen Druckbereichs (60) in einer Draufsicht in dem Bereich zur Abschirmung von sichtbarem Licht angeordnet sind.

13. Verbundglas (1) nach einem der Ansprüche 1 bis 12, wobei:
ein Minimaldurchmesser C des zweiten ebenen Druckbereichs (60) und ein Maximaldurchmesser D des Übertragungsbereichs (50) eine Beziehung C D erfüllen.

14. Verbundglas (1) nach Anspruch 13, wobei:
der Minimaldurchmesser C des zweiten ebenen Druckbereichs (60) und der Maximaldurchmesser D des Übertragungsbereichs (50) eine Beziehung 2D > C erfüllen.

15. Verbundglas (1) nach einem der Ansprüche 1 bis 14, wobei:
die Übertragungsregion (50) an einem mittleren Bereich des zweiten ebenen Druckbereichs (60) angeordnet ist.

## Revendications

1. Verre feuilleté (1) comportant une plaque de verre comportant :
une première région compressive plane (70) ayant une largeur prescrite à l'intérieur d'un bord périphérique externe de la plaque de verre dans une vue en plan ;
une première région de traction plane (71) adjacente à un côté périphérique interne de la première région compressive plane (70) et ayant une largeur prescrite ;
une région neutre (72) occupant un côté périphérique interne de la première région de traction plane (71) ; et
une seconde région compressive plane (60) située sur un côté périphérique interne de la première région compressive plane (70) dans une vue en plan ;
**caractérisé en ce que** :
la plaque de verre comporte en outre une région de transmission (50) pour des signaux transmis à/depuis un dispositif d'information, la région de transmission (50) étant située au sein de la seconde région compressive plane (60) ou d'une région entourée par la seconde région compressive plane (60).

2. Verre feuilleté (1) comportant une plaque de verre comportant :
une première région compressive plane (70) ayant une largeur prescrite à l'intérieur d'un bord périphérique externe de la plaque de verre dans une vue en plan ; et
une seconde région compressive plane (60) située sur un côté périphérique interne de la première région compressive plane (70) dans une vue en plan ;
**caractérisé en ce que** :
la seconde région compressive plane (60) est intégrée dans la première région compressive plane (70) et
une région de transmission (50) pour des signaux transmis à/depuis un dispositif d'information est située au sein de la seconde région compressive plane (60) ou d'une région entourée par la seconde région compressive plane (60).

3. Verre feuilleté selon la revendication 1 ou 2, dans lequel la première région compressive plane (70) a une largeur de 5 mm à 15 mm.

4. Verre feuilleté (1) selon l'une quelconque des revendications 1 à 3, dans lequel :
la plaque de verre comporte en outre une région de contrainte de traction plane située sur un côté périphérique externe de la seconde région compressive plane (60).

5. Verre feuilleté (1) selon l'une quelconque des revendications 1 à 4, dans lequel :
une partie principale d'une zone d'une région test A, telle que prévue par la norme JIS R 3212 : 2008, est la région neutre (71) dans une vue en plan.

6. Verre feuilleté (1) selon l'une quelconque des revendications 1 à 5, dans lequel :
une valeur moyenne de contrainte compressive plane dans la seconde région compressive plane (60) est de 15 MPa ou moins.

7. Verre feuilleté (1) selon l'une quelconque des revendications 1 à 6, dans lequel :
la seconde région compressive plane (60) a une portion dans laquelle une valeur de contrainte compressive au niveau d'un centre dans une direction d'épaisseur de la plaque de verre est de zéro ou plus.

8. Verre feuilleté (1) selon l'une quelconque des revendications 1 à 7, dans lequel :
une forme externe de la seconde région compressive plane (60) inclut une portion en forme d'arc.

9. Verre feuilleté (1) selon l'une quelconque des revendications 1 à 8, dans lequel :
la seconde région compressive plane (60) est située à l'opposé de la première région compressive plane (70).

10. Verre feuilleté (1) selon l'une quelconque des revendications 1 à 9, dans lequel :
la seconde région compressive plane (60) a une forme circulaire dans une vue en plan.

11. Verre feuilleté (1) selon l'une quelconque des revendications 1 à 10, dans lequel :
la seconde région compressive plane (60) a une forme de beignet dans une vue en plan.

12. Verre feuilleté (1) selon l'une quelconque des revendications 1 à 11, dans lequel :
la plaque de verre comporte en outre une région de protection contre la lumière visible dans une vue en plan et
une région de contrainte de traction plane et un côté périphérique externe au sein de la seconde région compressive plane (60) sont situés dans la région de protection contre la lumière visible dans une vue en plan.

13. Verre feuilleté (1) selon l'une quelconque des revendications 1 à 12, dans lequel :
un diamètre minimum C de la seconde région compressive plane (60) et un diamètre maximum D de la région de transmission (50) satisfont une relation C D.

14. Verre feuilleté (1) selon la revendication 13, dans lequel :
le diamètre minimum C de la seconde région compressive plane (60) et le diamètre maximum D de la région de transmission (50) satisfont une relation 2D > C.

15. Verre feuilleté (1) selon l'une quelconque des revendications 1 à 14, dans lequel :
la région de transmission (50) est située sur une région centrale de la seconde région compressive plane (60).
